# EUROPEAN PATENT APPLICATION

(11) **EP 4 685 081 A1**
(43) Date of publication of application: **28.01.2026**
(21) Application number: 24903979.3
(22) Date of filing: 05.11.2024
(51) Int. Cl.: B65D 88/02, B65D 88/74, H01M 50/244

(54) **CONTAINER MODULE**

(30) Priority: 14.12.2023 KR 20230182380
(71) Applicant: LG Energy Solution, Ltd., Seoul 07335 (KR)
(72) Inventor: YU, Sang-Hyun, Daejeon 34122 (KR)
(74) Representative: BCKIP Part mbB
(86) International application number: PCT/KR2024/017291
(87) International publication number: WO 2025/127412

(57) **Abstract**

Disclosed is a container module. The container module includes a case providing an inner space; a battery pack accommodated inside the case; a pipe positioned inside the case and having a flow path; and a drain case positioned below the pipe and providing an inner space.

## Description

### TECHNICAL FIELD

The present disclosure relates to a container module.

The present application claims priority to Korean Patent Application No. 10-2023-0182380 filed on December 14, 2023 in the Republic of Korea, the disclosures of which are incorporated herein by reference.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, with the emerging issues such as a lack of power or eco-friendly energy, Energy Storage Systems (ESS) used to store power for later use are gaining more attention. For example, one of proposed methods for controlling power supply is smart grid systems. The power usage is not constant and can change at any time. Typically, the power usage sharply increases in the summer daytime due to the use of cooling devices and sharply decreases in the nighttime. From the perspective of power consumption, power consumption is not constant and may frequently change, but from the perspective of power supply, the amount of power produced can be controlled to some extent, but in reality, it is difficult to meet the amount of power required. Accordingly, power oversupply or power shortage may occur due to the inequality in power supply and power consumption, and to solve this problem, the smart grid systems may flexibly store and control power. The concept of smart grid systems is that power is stored in times or regions in which surplus power occurs and the stored power is supplied in times and regions in which power shortage occurs. One of the essential elements for building the smart grid systems may be energy storage systems for storing power. More recently, with the widespread use of electric vehicles, energy storage systems may be used in facilities for charging the electric vehicles, for example, charging stations.

The energy storage system may include a plurality of battery containers. The number of battery containers and their placement may vary depending on different environments and requirements. To meet the requirements, there is a growing need for a battery container made up of a combination of small modules to improve energy density and to be expandable in various forms.

### DISCLOSURE

### Technical Problem

The present disclosure is designed to solve these and other problems.

The present disclosure is directed to providing a battery assembly capable of removing humidity inside.

The present disclosure is also directed to providing a battery assembly with improved electrical safety.

The present disclosure is also directed to providing a battery assembly with a simplified structure.

The present disclosure is also directed to providing a battery assembly of a smaller size.

### Technical Solution

In one aspect of the present disclosure, there is provided a battery assembly comprising: a case providing an inner space; a battery pack accommodated inside the case; a pipe positioned inside the case and having a flow path; and a drain case positioned below the pipe and providing an inner space.

In addition, the pipe may extend in an upper and lower direction.

In addition, the drain case may have an open upper surface, and the inner space of the drain case may face the pipe.

In addition, a lower end of the pipe may be accommodated in the drain case.

In addition, the pipe may include a pin protruding from an outer surface thereof and extending along an upper and lower direction.

In addition, the pin may be provided in plurality, and the plurality of pins may be arranged along a circumference of the pipe.

In addition, the container module may further comprise a drain tube communicating with the drain case.

In addition, the drain tube may have one end connected to the drain case and the other end positioned lower than the one end.

In addition, the case may include a bottom panel having a drainage hole; and a drain portion installed in the drainage hole, and the drain portion may be located below the drain case.

In addition, the container module may further comprise a drain tube communicating with the drain case and extending toward the drainage hole.

In addition, the container module may further comprise a branch tube communicating with the pipe and the battery pack.

In addition, the pipe may have a flat surface extending along an upper and lower direction, and the branch tube may be connected to the flat surface.

In addition, the container module may further comprise a port configured to communicate the pipe and the branch tube, and the port may include a guard that protrudes from an outer surface thereof and is positioned between the pipe and the branch tube.

A container system according to an aspect of the present disclosure includes the container module of the present disclosure.

An energy storage system according to an aspect of the present disclosure includes the container module of the present disclosure.

### Advantageous Effects

According to at least one of the embodiments of the present disclosure, humidity inside the container module may be removed.

According to at least one of the embodiments of the present disclosure, electrical safety of the container module may be improved.

According to at least one of the embodiments of the present disclosure, the structure of the container module may be simplified.

According to at least one of the embodiments of the present disclosure, the size of the container module may be reduced.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a container module according to an embodiment of the present disclosure.
FIG. 2 is a drawing showing that a front panel of the container module of FIG. 1 is opened.
FIG. 3 is an enlarged drawing showing part A of FIG. 2.
FIG. 4 is a drawing schematically showing a drainage system of the container module of FIG. 1.
FIG. 5 is an enlarged drawing showing part B of FIG. 4.
FIG. 6 is a drawing schematically showing a cross-sectional configuration along the cutting line C-C' of FIG. 5.
FIG. 7 is an enlarged drawing showing part D of FIG. 5.
FIG. 8 is a drawing schematically showing a cross-sectional configuration along the cutting line F-F' of FIG. 2.
FIG. 9 is a drawing schematically showing a cross-sectional configuration along the cutting line E-E' of FIG. 8.
FIG. 10 is a drawing showing a drainage shape in the cross-sectional configuration of FIG. 9.
FIG. 11 is a drawing schematically showing a cross-sectional configuration along the cutting line G-G' of FIG. 1.
FIG. 12 is a drawing schematically showing a cross-sectional configuration along the cutting line H-H' of FIG. 11.
FIG. 13 is a drawing schematically showing a drainage shape in the cross-sectional configuration of FIG. 12.
FIG. 14 is a drawing schematically showing a cross-sectional configuration along the cutting line I-I' of FIG. 5.
FIG. 15 is a drawing magnified showing part B of FIG. 4.
FIG. 16 is a drawing showing a container according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

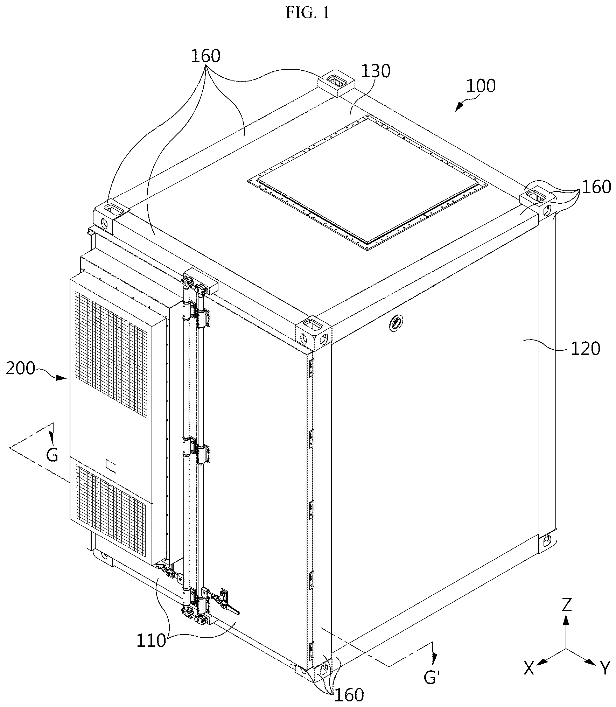

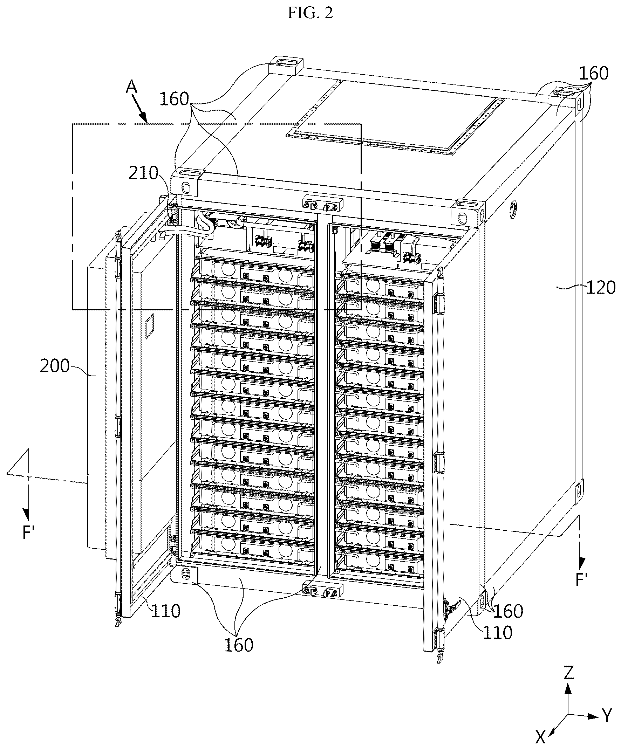

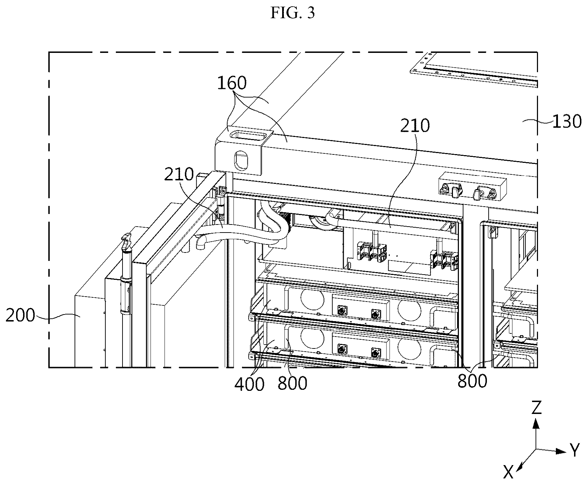

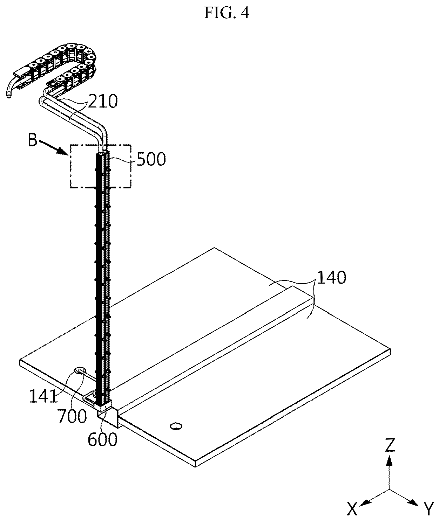

FIG. 1 is a diagram showing a container module according to an embodiment of the present disclosure. FIG. 2 is a drawing showing that a front panel 110 of the container module of FIG. 1 is opened. FIG. 3 is an enlarged drawing showing part A of FIG. 2. FIG. 4 is a drawing schematically showing a drainage system of the container module of FIG. 1.

Referring to FIGS. 1 to 4, the container module according to an embodiment of the present disclosure may include a case 100, a battery pack 400, a pipe 500, and a drain case 600.

The case 100 may provide a space inside. The case 100 may form an appearance of the container module. The case 100 may include a frame 160 and a plurality of panels coupled to the frame 160. The case 100 may include a front panel 110, a rear panel, a side panel 120, a top panel 130, and a bottom panel 140. The case 100 may have a rectangular parallelepiped shape.

The battery pack 400 may be positioned, installed, fastened, coupled, or fixed inside the case 100. The battery pack 400 may include a plurality of battery cells. In this case, the battery cells may mean secondary batteries. The battery pack 400 may be provided in plurality. The battery pack 400 may have a rectangular parallelepiped shape.

The pipe 500 may be positioned inside the case 100. The pipe 500 may extend along the upper and lower direction or the Z-axis direction. The pipe 500 may have a flow path inside. A cooling fluid may flow through the pipe 500. For example, a cooling water may flow through the pipe 500. The pipe 500 may include a metal material. In addition, the pipe 500 may include a material having high thermal conductivity. For example, the pipe 500 may be made of aluminum. In addition, the pipe 500 may be manufactured by an extrusion method.

The drain case 600 may provide a space inside. The drain case 600 may be located below the pipe 500. Also, the drain case 600 may include a material with higher insulation properties than the pipe 500.

According to this configuration of the present disclosure, the humidity inside the container module may be lowered. If the humidity inside the container module is high, the moisture may condense on the surface of the pipe 500. The condensed moisture may move downward by gravity. Also, the moisture may be captured or accommodated in the drain case 600. Therefore, the container module may be prevented from being electrically damaged by moisture or condensation.

Referring to FIGS. 1 to 4, the cooling unit 200 may be installed at the front panel 110. For example, the cooling unit 200 may be a heat exchanger such as a chiller or a cooler. The cooling unit 200 may control the temperature of a cooling fluid flowing inside the case 100. The cooling unit 200 may supply or circulate a cooling liquid or a cooling gas into the case 100 through a pipe.

According to this configuration of the present disclosure, the container module may remove moisture by using the pipe 500 and the drain case 600 without having an HVAC that may directly remove moisture. The container module may be equipped with a chiller with less functions than an HVAC instead of an HVAC. As a result, the economic efficiency of the container module may be improved, and the structure of the container module may be simplified.

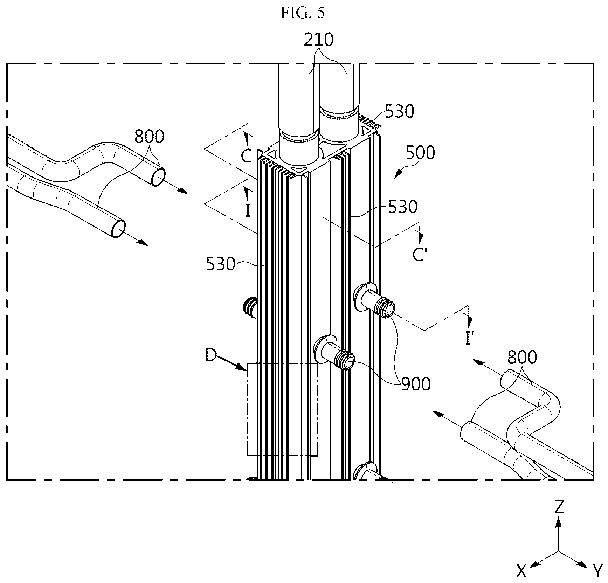

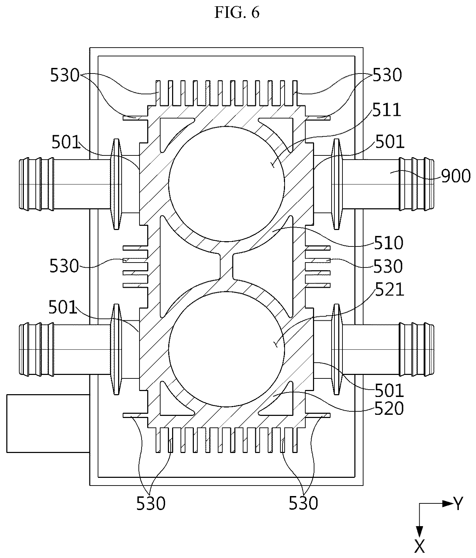

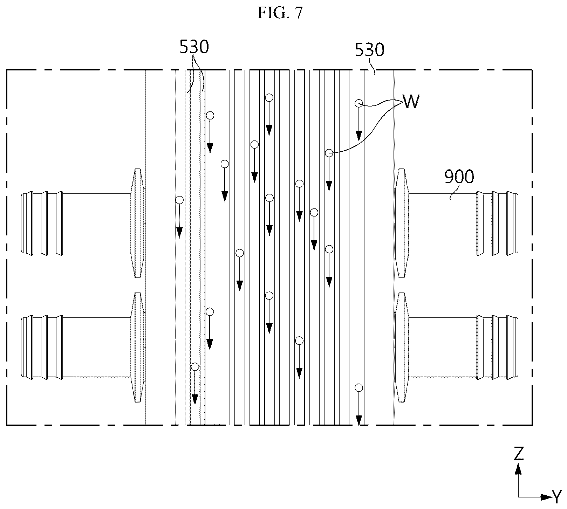

FIG. 5 is an enlarged drawing showing part B of FIG. 4. FIG. 6 is a drawing schematically showing a cross-sectional configuration along the cutting line C-C' of FIG. 5. FIG. 7 is an enlarged drawing showing part D of FIG. 5. Referring to FIGS. 5 to 7, the pipe 500 may include a supply pipe 510 and a discharge pipe 520. The supply pipe 510 may form a supply flow path 511 therein. The discharge pipe 520 may form a discharge flow path 521 therein. Cooling fluid may be supplied to the battery pack 400 through the supply pipe 510. The cooling fluid that cools the battery pack 400 and is discharged may be retrieved through the discharge pipe 520.

The pipe 500 may include a pin 530. The pin 530 may protrude from an outer surface of the pipe 500. The pin 530 may extend along the upper and lower direction, the Z-axis direction, or the longitudinal direction of the pipe 500. The pin 530 may be provided in plurality. The plurality of pins 530 may be arranged along the circumference direction of the pipe 500.

Moisture inside the case 100 may condense on the surface of the pin 530 or the pipe 500. Also, the condensed moisture may move downward or in the -Z direction by gravity.

According to this configuration of the present disclosure, the surface area of the pipe 500 may be increased. This may facilitate moisture condensation.

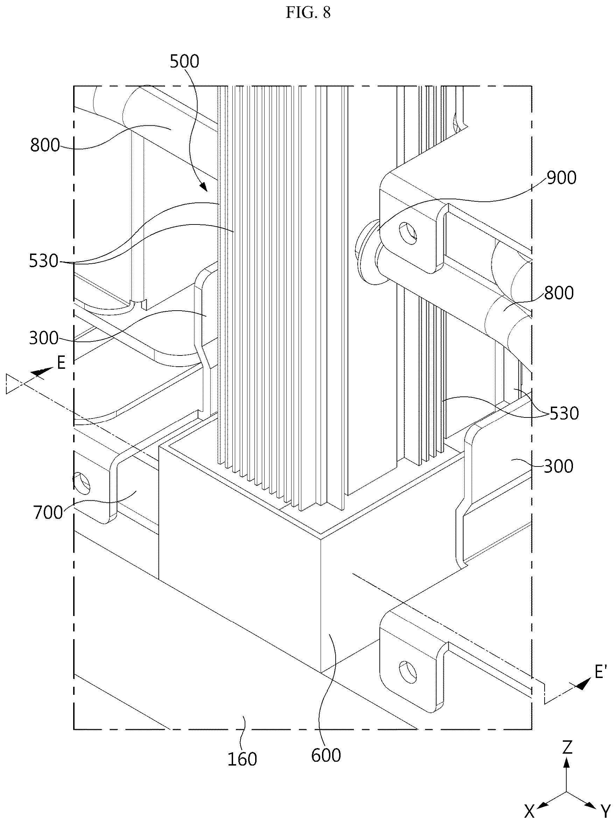

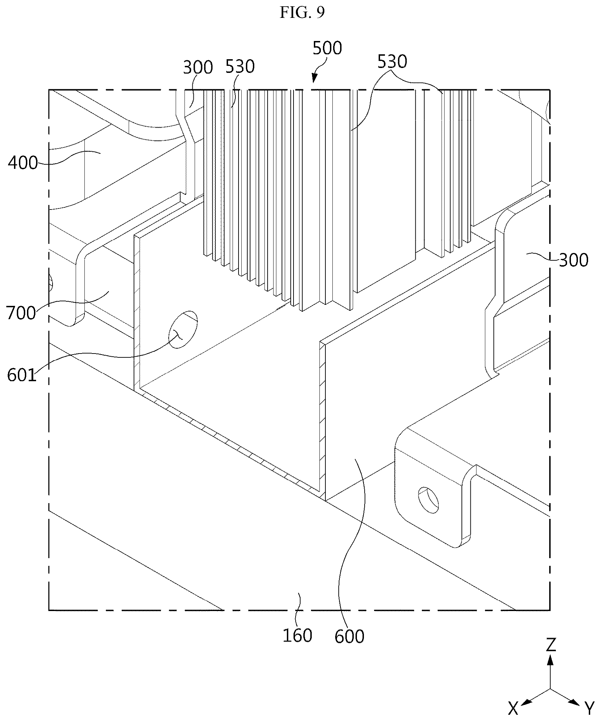

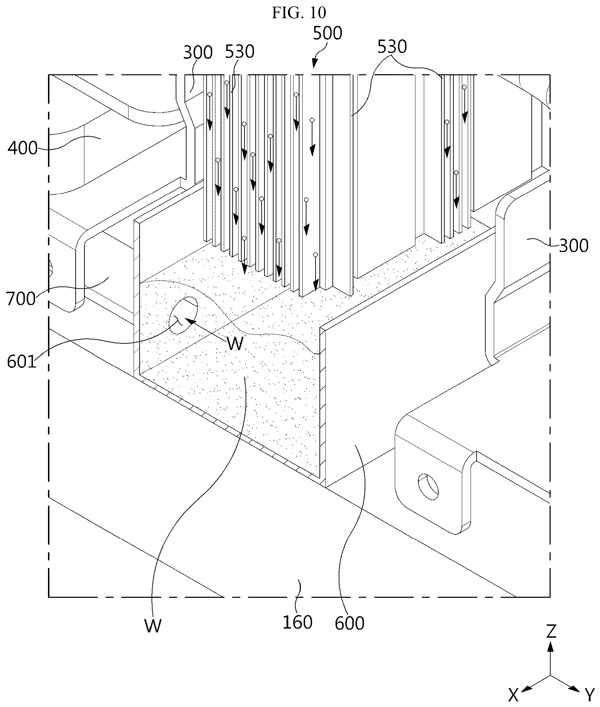

FIG. 8 is a drawing schematically showing a cross-sectional configuration along the cutting line F-F' of FIG. 2. FIG. 9 is a drawing schematically showing a cross-sectional configuration along the cutting line E-E' of FIG. 8. FIG. 10 is a drawing showing a drainage shape in the cross-sectional configuration of FIG. 9.

Referring to FIGS. 8 to 10, the drain case 600 may have an open upper surface. Also, the inner space of the drain case 600 may face the pipe 500. In addition, the inner space of the drain case 600 may face the lower end of the pipe 500. In addition, the open portion of the drain case 600 may be formed to be larger than the diameter of the pipe 500.

According to this configuration of the present disclosure, the moisture moving down along the surface of the pipe 500 may be captured or accommodated in the drain case 600.

Referring to FIGS. 8 to 10, at least a portion of the pipe 500 may be accommodated in the drain case 600. Also, the lower end of the pipe 500 may be positioned lower than the upper end of the drain case 600.

According to this configuration of the present disclosure, the moisture moving down along the surface of the pipe 500 may be more stably captured or accommodated in the drain case 600.

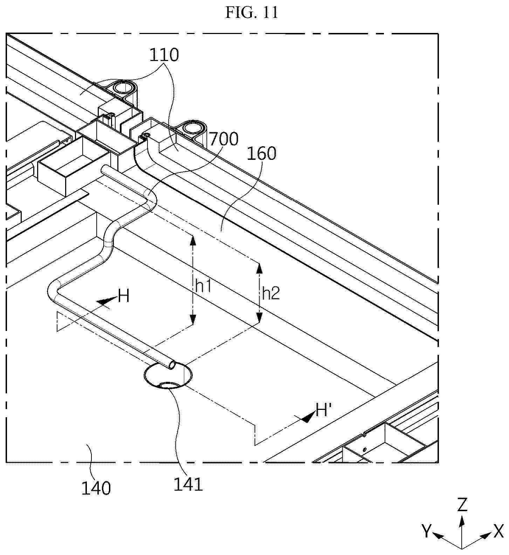

FIG. 11 is a drawing schematically showing a cross-sectional configuration along the cutting line G-G' of FIG. 1. Referring to FIGS. 10 and 11, the container module may include a drain tube 700 that communicates with the drain case 600. The drain tube 700 may include a material having higher insulating properties than the pipe 500. The drain case 600 may have a discharge hole 601. The drain tube 700 may communicates with the discharge hole 601.

According to this configuration of the present disclosure, the moisture captured or accommodated in the drain case 600 may be discharged through the drain tube 700.

Referring to FIG. 11, the drain tube 700 may extend along the frame 160 and the bottom panel 140. The drain tube 700 may have one end connected to the drain case 600 and the other end positioned lower than the one end. One end of the drain tube 700 may be positioned higher than the other end by h2.

According to this configuration of the present disclosure, the moisture captured or accommodated in the drain case 600 may move through the drain tube 700 by gravity. Therefore, the container module may not be equipped with a separate power device to discharge moisture.

Referring to FIG. 11, the drain tube 700 may extend toward the drainage hole 141. The drainage hole 141 may be provided in the bottom panel 140. The drain case 600 may be positioned higher than the bottom panel 140 by h1.

According to this configuration of the present disclosure, the moisture captured or accommodated in the drain case 600 may move through the drain tube 700 by gravity. Therefore, the container module may not be equipped with a separate power device to discharge moisture.

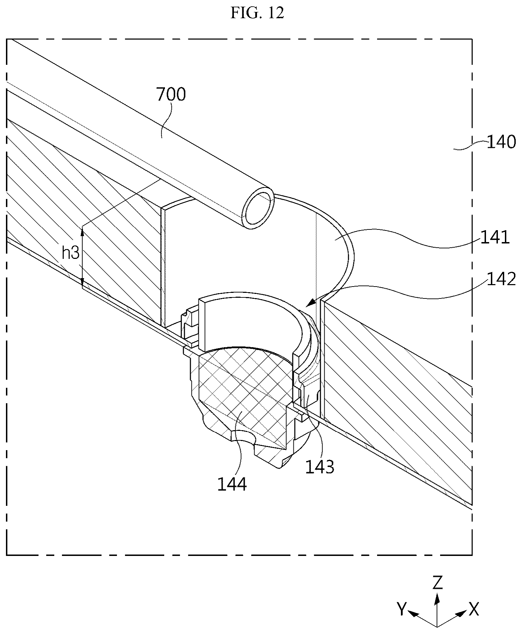

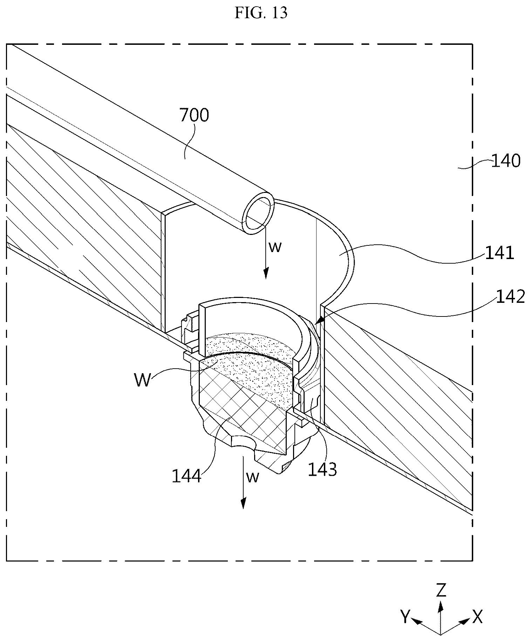

FIG. 12 is a drawing schematically showing a cross-sectional configuration along the cutting line H-H' of FIG. 11. FIG. 13 is a drawing schematically showing a drainage shape in the cross-sectional configuration of FIG. 12. Referring to FIGS. 12 and 13, the case 100 may include a bottom panel 140. Also, the bottom panel 140 may include a drain portion 142. The drain portion 142 may be installed in the drainage hole 141. The drain portion 142 may be located below the drain case 600. The drain portion 142 may include a holder 143 and a filter 144. The filter 144 may be installed and fixed to the holder 143. The filter 144 may discharge moisture inside the case 100 to the outside. In addition, the filter 144 may block foreign substances from penetrating into the case 100. The drain tube 700 may be located higher than the upper end of the filter 144 by h3.

According to this configuration of the present disclosure, the moisture discharged through the drain portion 142 may be discharged through the exterior of the case 100 by gravity. Therefore, the container module may not be equipped with a separate power device to discharge moisture.

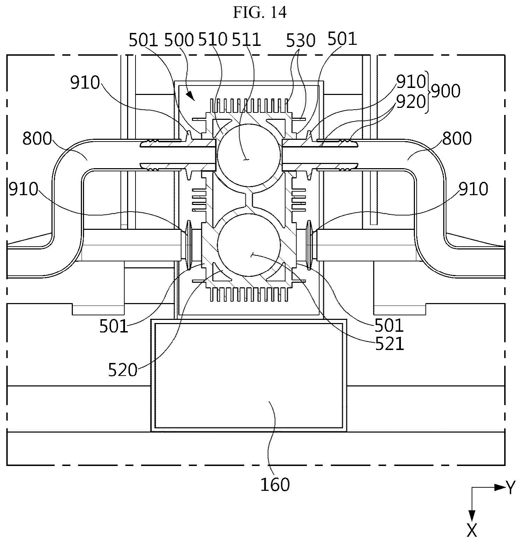

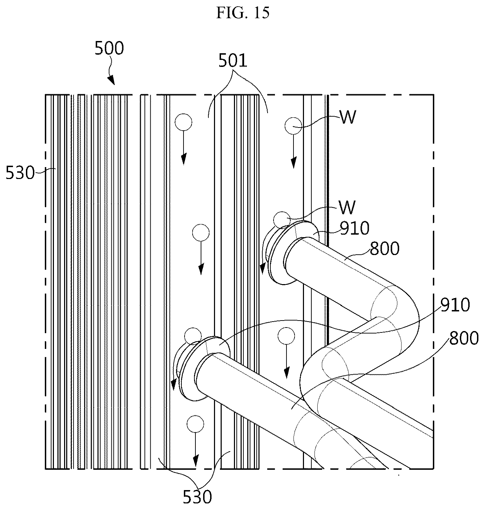

FIG. 14 is a drawing schematically showing a cross-sectional configuration along the cutting line I-I' of FIG. 5. FIG. 15 is a drawing magnified showing part B of FIG. 4. Referring to FIGS. 5, 6, 14 and 15, the container module according to an embodiment of the present disclosure may further include a branch tube 800 that is connected to the pipe 500. The branch tube 800 may communicate the pipe 500 and the battery pack 400. The branch tube 800 may include a material having higher insulating properties than the pipe 500.

According to this configuration of the present disclosure, moisture condensation inside the case 100 may occur intensively in the pipe 500. Among the components through which the cooling fluid flows, the pipe 500 may be made of a material with the lowest insulating property. As a result, moisture may condense on the surface of the pipe 500 and be captured in the drain case 600.

Referring to FIGS. 5, 6, 14 and 15, the pipe 500 may have a flat surface 501. The flat surface 501 may be elongated along the upper and lower direction, the Z-axis direction or the longitudinal direction of the pipe 500. The pin 530 may not be formed on the flat surface 501. Also, the branch tube 800 may be connected, communicated, or coupled to the flat surface 501.

According to this configuration of the present disclosure, the process for connecting the pipe 500 and the branch tube 800 may be performed easily. The pipe 500 may be manufactured by an extrusion method. Therefore, if the pin 530 is formed at a portion of the pipe 500 where the branch tube 800 is connected, the process for connecting the branch tube 800 may be performed difficultly. Since the pipe 500 has a flat surface 501, the pipe 500 and the branch tube 800 may be coupled easily.

Referring to FIGS. 5, 6, 14, and 15, the container module according to an embodiment of the present disclosure may further include a port 900. The port 900 may communicate the branch tube 800 and the pipe 500. The port 900 may include a coupling portion 920 and a guard 910. The coupling portion 920 may be provided on both sides of the guard 910, respectively. Alternatively, the guard 910 may be located between the coupling portions 920. A part of the coupling portion 920 may be inserted into the pipe 500. Also, another part of the coupling portion 920 may be inserted into the branch tube 800. In addition, the guard 910 may be located between the branch tube 800 and the pipe 500. The guard 910 may be formed to have a diameter larger than the coupling portion 920. The guard 910 may extend along the circumference of the coupling portion 920.

According to this configuration of the present disclosure, the safety of the container module may be improved. The moisture condensed on the surface of the pipe 500 may move downward. At this time, the guard 910 may block the moisture from flowing into the branch tube 800. The condensed moisture does not pass into the branch tube 800 by the guard 910, and may move downward along the circumference of the coupling portion 920.

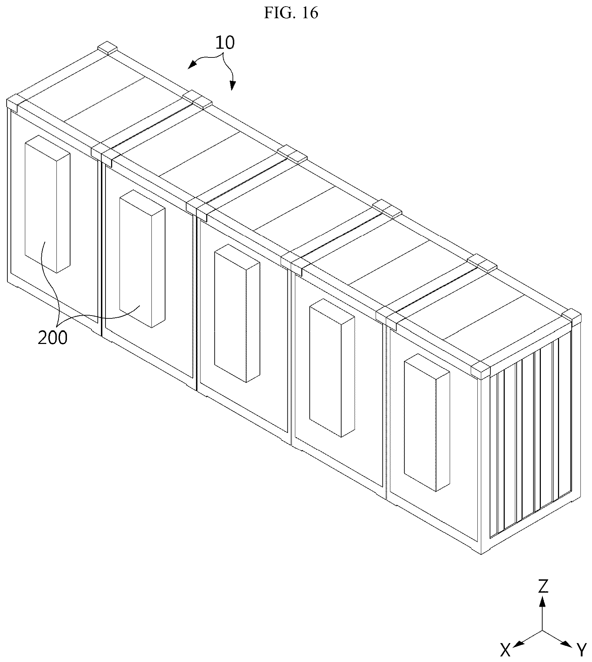

FIG. 16 is a drawing showing a container according to an embodiment of the present disclosure. Referring to FIG. 16, the container system may include a plurality of container modules 10. The plurality of container modules 10 may be physically or electrically connected.

The case 100 may be configured to be stacked on or coupled with a case 100 of another container module 10. In addition, the container system may additionally include a control module. The control module may be fastened, coupled, connected, stacked, or fixed to the side panel 120 of the container module 10.

The control module may be electrically connected to the plurality of container modules 10 included in the container system. The control module may control the charge and discharge of the plurality of container modules 10. Additionally, the control module may acquire state information of the plurality of container modules 10.

The container system may further include a fire fighting module to control thermal events.

An energy storage system (ESS) according to the present disclosure may include the container module 10 according to the present disclosure. The energy storage system may include a plurality of container systems. Additionally, the container system may include a plurality of container modules 10. The energy storage system may include a predetermined number of container modules 10 combined with the control module 20 to form a link group.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A container module comprising:
a case providing an inner space;
a battery pack accommodated inside the case;
a pipe positioned inside the case and having a flow path; and
a drain case positioned below the pipe and providing an inner space.

2. The container module according to claim 1,
wherein the pipe extends in an upper and lower direction.

3. The container module according to claim 1,
wherein the drain case has an open upper surface, and
wherein the inner space of the drain case faces the pipe.

4. The container module according to claim 1,
wherein a lower end of the pipe is accommodated in the drain case.

5. The container module according to claim 1,
wherein the pipe includes a pin protruding from an outer surface thereof and extending along an upper and lower direction.

6. The container module according to claim 5,
wherein the pin is provided in plurality, and
wherein the plurality of pins are arranged along a circumference of the pipe.

7. The container module according to claim 1, further comprising:
a drain tube communicating with the drain case.

8. The container module according to claim 7,
wherein the drain tube has one end connected to the drain case and the other end positioned lower than the one end.

9. The container module according to claim 1,
wherein the case includes:
a bottom panel having a drainage hole; and
a drain portion installed in the drainage hole,
wherein the drain portion is located below the drain case.

10. The container module according to claim 9, further comprising:
a drain tube communicating with the drain case and extending toward the drainage hole.

11. The container module according to claim 1, further comprising:
a branch tube communicating with the pipe and the battery pack.

12. The container module according to claim 11,
wherein the pipe has a flat surface extending along an upper and lower direction, and
wherein the branch tube is connected to the flat surface.

13. The container module according to claim 11, further comprising:
a port configured to communicate the pipe and the branch tube,
wherein the port includes a guard that protrudes from an outer surface thereof and is positioned between the pipe and the branch tube.

14. A container system comprising the container module according to any one of claims 1 to 13.

15. An energy storage system comprising the container module according to any one of claims 1 to 13.
